# EUROPEAN PATENT SPECIFICATION

(11) **EP 0 701 918 B1**
(45) Date of publication and mention of the grant of the patent: **20.10.1999**
(21) Application number: 95110660.8
(22) Date of filing: 07.07.1995
(51) Int. Cl.: B60K 28/14

(54) **Emergency inertial system for disconnecting a vehicle electric circuit from the electricity source**
Notfallträgheitssystem zur Unterbrechung eines Fahrzeugstromkreises von der Spannungsquelle
Système de sécurité inertiel pour déconnecter un circuit électrique d'une source électrique

(30) Priority: 12.07.1994 IT TO940567
(43) Date of publication of application: 20.03.1996
(73) Proprietor: FIAT AUTO S.p.A., 10135 Torino (IT)
(72) Inventor: Balbiano, Giuseppe, I-10048 Vinovo (IT); Rinaldi, Giuseppe, I-10149 Torino (IT)
(74) Representative: Plebani, Rinaldo

(56) References cited:
- EP-A- 0 309 307
- DE-A- 2 241 528
- FR-A- 2 594 256

## Description

The present invention relates to an emergency inertial system for disconnecting a vehicle electric circuit from the electricity source, to prevent sparks being generated by impact-induced shortcircuiting and so safeguard against fire in the event of a crash.

In the design of a vehicle, great importance is currently attached to active and passive "safety" problems; and one of the principal aims in the "passive" safety field in particular is to prevent the vehicle from being set on fire in the event of a crash involving violent impact and resulting in the failure of structural parts of the vehicle and critical components such as the fuel supply lines. For this purpose, vehicles are fitted with inertial safety systems activated by the sharp deceleration of the vehicle on impact, e.g. solenoid valves controlled by inertial switches and for preventing leakage of fuel or other inflammable liquids.

A major fire hazard and one of the greatest dangers facing the user, however, is possible shortcircuiting of the vehicle electric system in the event of a crash, and the generation of sparks or high-voltage electric discharges, prevention of which requires a system capable of rapidly disconnecting the battery (or any other electricity source on the vehicle) from the vehicle electric circuit. A straightforward inertial switch of the type currently used, for example, for controlling fuel cutoff solenoid valves fails to provide a solution to the problem on account of the high currents absorbed by the user equipment of the vehicle electric system (300 to 800 A when starting up standard cars and vans respectively).

When the switch is opened, such high currents would in fact result in the generation of a strong spark, i.e. in the hazard the switch is actually designed to safeguard against, even without the electric system shortcircuiting. And the problem is even further compounded in the case of electrically powered vehicles in which the currents involved, and hence the danger of impact-induced shortcircuiting, are even greater.

At present, the problem can only be solved using complex, high-cost electronic control circuits enabling rapid, live, sparkfree disconnection of the battery.

It is an object of the present invention to provide a solution to the problem designed to overcome the disadvantages in terms of complexity and cost typically associated with currently marketed solutions, and in particular to provide an emergency inertial system for disconnecting the electric circuit of a vehicle from the electricity source in the event of impact, and which is both cheap and easy to produce, and provides for eliminating any risk of sparking.

According to the present invention, there is provided an emergency inertial system for disconnecting the electric circuit of a vehicle from the electricity source in the event of impact, to prevent sparks being generated by impact-induced shortcircuiting and so safeguard against fire; the system comprising a 360° active inertial switch in series with said electric circuit; the inertial switch comprising a floating mass, first electric contact means connected to opposite terminals of said electric circuit and separated by an insulating means, and second electric contact means cooperating with the floating mass so as to switch from a first operating position wherein they shortcircuit said first contact means via said insulating means, to a second operating position wherein they are disconnected from said first electric contact means; characterized in that said first electric contact means comprise respective carbon brushes.

By simply using brushes, identical to those used for supplying electric motors, as the fixed contacts of an inertial switch similar to those currently used for cutting off low currents (maximum 2-4 A), it has surprisingly been found possible to cut off extremely high currents (800 A and over) without generating a spark which may result in fire or explosion. Moreover, the inertial switch so formed is easy to produce, and the inertial system as a whole is compact, highly reliable, and cheap to produce as compared with known inertial cutoff systems featuring complex electronic circuits (roughly ten thousand lire as compared with a few hundred thousand for known electronic systems).

Preferably, the inertial switch is located adjacent to the electricity source, and the inertial system according to the invention also comprises an alarm circuit connected to the vehicle electric circuit and parallel to the inertial switch, and in turn comprising a resistor and display means in the passenger compartment of the vehicle.

In the event of accidental operation, the user is therefore informed that the power cutoff is due, not to a fault, but to accidental triggering of the inertial system (e.g. when braking sharply) which must be reset to restart the vehicle. In view of the highly straightforward and substantially mechanical design of the system, this is also reset quickly, easily and reliably.

A non-limiting embodiment of the present invention will be described by way of example with reference to the accompanying drawings, in which:
Figure 1 shows, schematically, the electric circuit of a vehicle (not shown) featuring the emergency inertial system according to the present invention;
Figures 2 and 3 show top and side sections respectively of the inertial switch forming part of the system according to the invention and in the closed position;
Figure 4 shows the same view as in Figure 3 but of the switch in the open position.

With reference to the accompanying drawings, number 1 indicates an emergency inertial system for any known type of road vehicle (not shown), and which provides, in the event of impact, for disconnecting the electricity source 2 - defined, for example, by the vehicle battery - from the vehicle electric circuit 3, to prevent the generation of sparks caused by impact-induced shortcircuiting, and so safeguard against fire and/or explosion or at any rate uncontrolled electrical discharge.

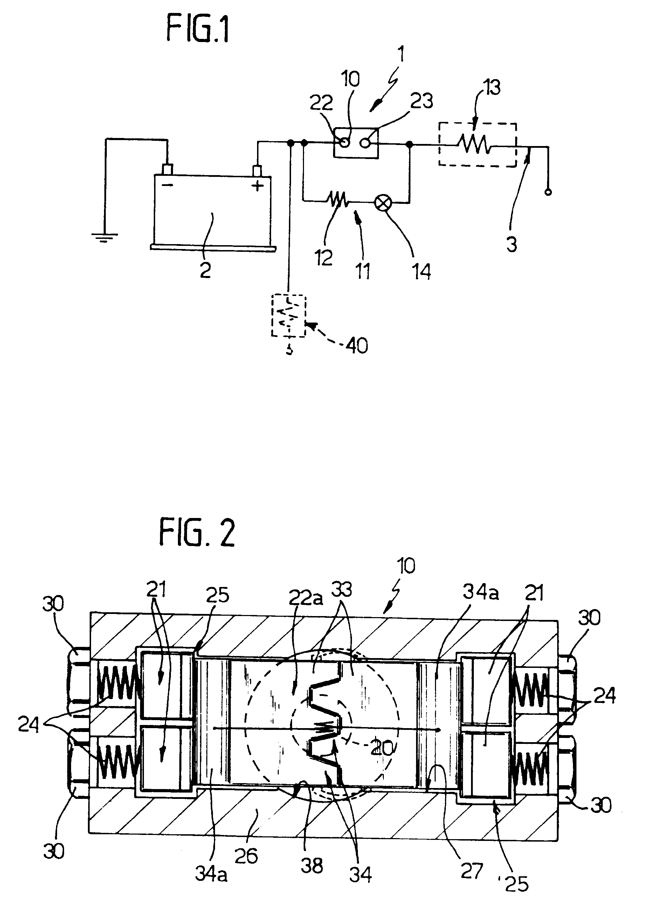

System 1 comprises a 360° active inertial switch 10 (shown more clearly in Figures 2, 3, 4) connected in series with circuit 3 and preferably adjacent to the electricity source, in particular immediately downstream from battery 2. In the non-limiting embodiment shown, system 1 also comprises an alarm circuit 11 connected to circuit 3 and parallel to inertial switch 10, and in turn comprising a resistor 12 of a fairly high value - roughly the same as the user equipment 13 of circuit 3 - and display means consisting, in the example shown, of an indicator light 14 (e.g. a LED) located in the passenger compartment of the vehicle, e.g. in a clearly visible position on the dashboard or instrument panel (said display means may of course also include acoustic indicators, etc.).

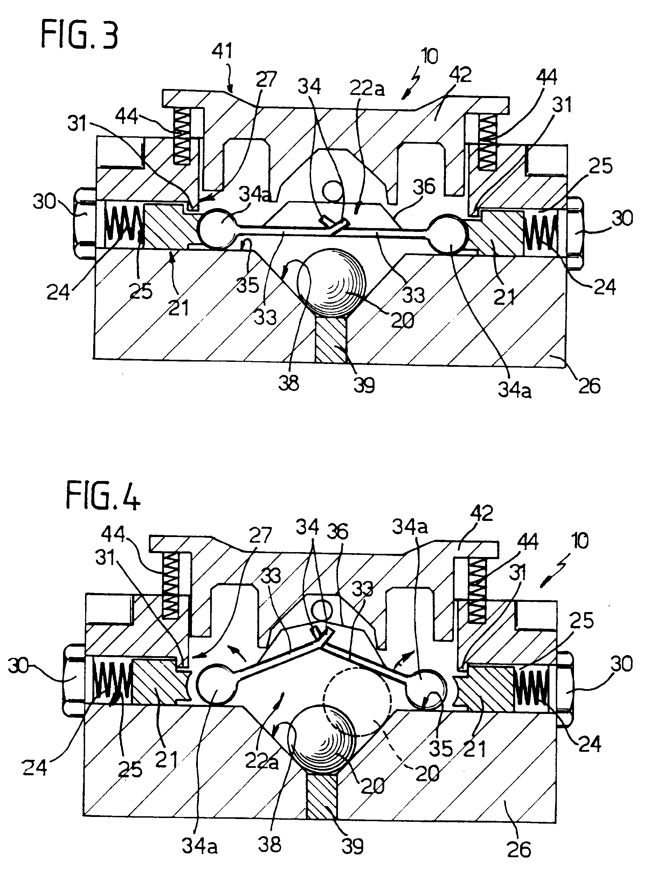

With reference to Figures 2 and 3, inertial switch 10 comprises a floating mass 20; first electric contact means 21 connected to opposite terminals 22 and 23 of circuit 3 and separated by an insulating means, in the example shown, in the form of atmospheric air as described later; and second electric contact means 22a cooperating with floating mass 20 so as to switch from a first operating position (Figure 3) wherein they shortcircuit contact means 21 via said insulating means, to a second operating position (Figure 4) wherein they are disconnected from contact means 21 and open circuit 3.

According to the invention, said first electric contact means are defined by respective carbon brushes 21 of the same type used for sliding contacts for supplying the rotors of electric motors, and which are mounted so as to slide, in opposition to elastic means 24, inside respective seats 25 formed in a body 26 made of insulating material, e.g. synthetic plastic material such as PVC.

In the non-limiting embodiment shown, seats 25 are open on the side facing an inner cavity 27 formed in body 26 and containing the insulating means - in the example shown, a straightforward unsealed empty cavity containing insulating means in the form of atmospheric air (alternatively, cavity 27 may of course be sealed and a vacuum formed inside, in which case, the insulating means is formed by the vacuum; or it may be filled with dielectric fluid forming the insulating means) - and brushes 21 project inside cavity 27 and are connected electrically to respective terminals 30 fitted externally to body 26.

In the non-limiting embodiment shown, seats 25 are open not only on the side facing cavity 27 but also on the opposite side; and elastic means 24 comprise helical springs made of electrically conducting material and gripped, on the opposite side to cavity 27, between a respective brush 21 and a respective adjustable stop means in seat 25 and comprising a respective terminal 30. Terminals 30 in fact are so formed as to screw inside seats 25 on the opposite side to cavity 27, to close the seats, form a mechanical stop and electric contact for springs 24, and so close the circuit with brushes 21. According to variations not shown, adjustable stop means 30 may of course be replaced by a fixed end wall of each seat 25, and brushes 21 may be connected electrically to external terminals in a different manner, e.g. by means of conductive tracks on which brushes 21 slide.

Whichever the case, towards central cavity 27, seats 25 present respective stop shoulders 31 (Figures 3 and 4) for arresting brushes 21 and formed on the opposite side to said adjustable stop means defined by terminals 30, so that brushes 21 are housed in sliding manner inside seats 25 and are normally pushed by springs 24 into the extracted position shown, wherein they project, on opposite sides, inside cavity 27.

In the non-limiting embodiment shown, said second electric contact means 22 comprise two plates 33 made of conducting material, housed side by side inside cavity 27, and connected in rotary manner to each other along respective opposite, e.g. comb-shaped, first sides 34 so as to be connected electrically to each other in hinged manner. Plates 33 are also so sized as to cooperate in electrically contacting manner with brushes 21 at respective opposite second sides 34a parallel to and opposite sides 34, in the form of cylindrical bars with their axes crosswise to the sliding direction of brushes 21, i.e. perpendicular to seats 25, and located facing seats 25 and resting on the bottom wall 35 of body 26.

Plates 33 are loaded by a spring 36 fitted across sides 34, so as to form a bistable assembly designed to selectively assume two different stable positions: a first position (Figure 3) wherein spring 36 is tensioned, so that plates 33 are substantially parallel to and coplanar with each other and cylindrical sides 34a contact carbon brushes 21; and a second position (Figure 4) wherein plates 33 are angled towards spring 36, and sides 34a are detached from brushes 21.

Inertial switch 10 also presents a floating mass in the form of a ball 20 made of ferromagnetic material, and housed inside cavity 27, beneath plates 33, in a substantially conical pocket 38 formed in wall 35 and on the bottom of which ball 20 is retained with predetermined force by a magnet 39.

In actual use, in the event of impact in any direction, ball 20 is accelerated and subjected to sufficient force for it to overcome the retaining force of magnet 39; it is therefore detached from the bottom of pocket 38 and, due to the conical shape of the pocket, rolls upwards (dotted line in Figure 4) to strike and shift one of plates 33 so as to produce an unstable condition of the assembly formed by spring 36 and plates 33; spring 36 is activated to draw plates 33 into the Figure 4 position; and plates 33, supported by cylindrical sides 34a on bottom wall 35, rotate and are detached from brushes 21 to open circuit 3.

By virtue of contacts 21 comprising carbon brushes of the type used in electric motors, the spark possibly produced by the extra current for opening the circuit, even under load, has surprisingly been found to be extremely small and at any rate perfectly safe. Simultaneously with the opening of circuit 3, the current produced by battery 2, and which can no longer be supplied to circuit 3, is supplied to circuit 11 to turn on indicator light 14; and any user equipment on the vehicle not to be cut off (door locks, emergency lights, etc.) may be branch connected to switch 10, as shown in Figure 1, and so supplied together with alarm circuit 11.

In the event of accidental operation, system 1 comprises a reset device 41 substantially comprising a cover 42 made of insulating material and fitted to body 26 by means of a bellows (not shown) to close cavity 27. In opposition to elastic means 44, cover 42 is movable towards cavity 27 to cooperate with plates 33 in the Figure 4 position and restore them to the Figure 3 position in opposition to spring 36. When the acceleration which caused it to move ceases, ball 20 obviously returns unaided and by force of gravity (and/or drawn by magnet 39) to the idle position at the bottom of pocket 38 and therefore in no way interferes with resetting of the system.

## Claims

1. An emergency inertial system (1) for disconnecting the electric circuit (3) of a vehicle from the electricity source in the event of impact, to prevent sparks being generated by impact-induced shortcircuiting and so safeguard against fire; the system comprising a 360° active inertial switch (10) in series with said electric circuit (3); the inertial switch (10) comprising a floating mass (20), first electric contact means (21) connected to opposite terminals (22,23) of said electric circuit (3) and separated by an insulating means, and second electric contact means (22a) cooperating with the floating mass (20) so as to switch from a first operating position wherein they shortcircuit said first contact means via said insulating means, to a second operating position wherein they are disconnected from said first electric contact means; characterized in that said first electric contact means comprise respective carbon brushes (21).

2. An inertial system as claimed in Claim 1, characterized in that said carbon brushes (21) are the same type used for the sliding contacts supplying the rotors of electric motors.

3. An inertial system as claimed in Claim 1 or 2, characterized in that said inertial switch (10) is located adjacent to, and more specifically immediately downstream from, said electricity source.

4. An inertial system as claimed in one of the foregoing Claims, characterized in that said brushes (21) are mounted so as to slide, in opposition to elastic means (24), inside respective seats (25) formed in a body (26) of insulating material; said seats (25) being open towards a cavity (27) containing said insulating means; and said brushes (21) projecting inside said cavity (27) and being electrically connected to respective terminals (30) fitted externally to said body (26).

5. An inertial system as claimed in Claim 4, characterized in that, towards said cavity (27), said seats (25) present respective stop shoulders (31) for arresting said brushes (21); said elastic means (24) being gripped, on the opposite side to said cavity (27), between respective said brushes (21) and respective stop means (30) in said seats and opposite said shoulders (31).

6. An inertial system as claimed in Claim 4 or 5, characterized in that said insulating means is in the form of air; and said second electric contact means (22) comprise two plates (33) made of conducting material, housed side by side inside said cavity (27), connected to each other in rotary manner along respective opposite first sides (34) so as to contact each other electrically, and cooperating in electrically contacting manner with said brushes (21) along respective opposite second sides (34a) parallel to and opposite said first sides (34), and located crosswise to the sliding direction of said brushes (21) and facing said brush seats (25); said plates (33) being loaded by a spring (36) fitted across said first sides (34) so as to form a bistable assembly designed to selectively assume two different stable positions, in a first of which the spring (36) is tensioned and said plates (33) are substantially parallel and coplanar with each other and contact said brushes (21) along said second sides (34a), and in a second of which said plates (33) are angled towards said spring (36) and said second sides (34a) are detached from said brushes (21).

7. An inertial system as claimed in Claim 6, characterized in that said floating mass comprises a ball (20) made of ferromagnetic material, housed inside said cavity (27), beneath said plates (33), in a substantially conical pocket (38), and retained on the bottom of said pocket (38) with predetermined force by a magnet (39); said ball (20), when detached from the bottom of said pocket (38), striking said plates (33) so that they are drawn by said spring (36) into said second position.

8. An inertial system as claimed in Claim 7, characterized in that it comprises a reset device (41) comprising a cover (42) made of insulating material, fitted to said body (26) to close said cavity (27), and movable towards said cavity (27), in opposition to elastic means (44), to cooperate with said plates (33) in said second position and restore them, in opposition to said spring (36), to said first position.

9. An inertial system as claimed in any one of the foregoing Claims, characterized in that it comprises an alarm circuit (11) connected to said electric circuit (3) of the vehicle and parallel to said inertial switch (10); said alarm circuit (11) comprising a resistor (12), and display means (14) located in the passenger compartment of the vehicle.

## Patentansprüche

1. Notfallträgheitssystem (1) zum Trennen des elektrischen Stromkreises (3) eines Fahrzeugs von der Stromquelle im Fall eines Aufpralls, um zu verhindern, daß Funken durch aufprallverursachtes Kurzschließen erzeugt werden, und so gegen Feuer zu schützen; wobei das System umfaßt: einen 360°-aktiven Trägheitsschalter (10) in Reihe mit dem elektrischen Stromkreis (3); wobei der Trägheitsschalter (10) umfaßt: eine freibewegliche Masse (20), erste elektrische Kontakteinrichtungen (21), die mit gegenüberliegenden Anschlüssen (22,23) des elektrischen Stromkreises (3) verbunden sind und durch eine Isoliereinrichtung getrennt sind, und zweite elektrische Kontakteinrichtungen (22a), die mit der freibeweglichen Masse (20) zusammenwirken, so daß sie von einer ersten Betriebsstellung, in der sie die ersten Kontakteinrichtungen über die Isoliereinrichtung kurzschließen, in eine zweite Betriebsstellung, in der sie von den ersten elektrischen Kontakteinrichtungen getrennt sind, umschalten; dadurch gekennzeichnet, daß die ersten elektrischen Kontakteinrichtungen jeweilige Kohlenbürsten (21) umfassen.

2. Trägheitssystem nach Anspruch 1, dadurch gekennzeichnet, daß die Kohlenbürsten (21) derselbe Typ sind, der für die Gleitkontakte verwendet wird, die die Rotoren von Elektromotoren versorgen.

3. Trägheitssystem nach Anspruch 1 oder 2, dadurch gekennzeichnet, daß der Trägheitsschalter (10) benachbart zu der Stromquelle und spezieller unmittelbar stromabwärts von ihr angeordnet ist.

4. Trägheitssystem nach einem der vorangehenden Ansprüche, dadurch gekennzeichnet, daß die Bürsten (21) angebracht sind, so daß sie im Widerstand gegen elastische Einrichtungen (24) im Innern von jeweiligen Sitzen (25) gleiten, die in einem Körper (26) aus Isoliermaterial gebildet sind; wobei die Sitze (25) in Richtung auf einen Hohlraum (27) offen sind, der die Isoliereinrichtung enthält; und wobei die Bürsten (21) ins Innere des Hohlraums (27) vorstehen und mit jeweiligen Anschlüssen (30) elektrisch verbunden sind, die von außen an dem Körper (26) angebracht sind.

5. Trägheitssystem nach Anspruch 4, dadurch gekennzeichnet, daß die Sitze (25) in Richtung auf den Hohlraum (27) jeweilige Anschlagschultern (31) darbieten, um die Bürsten (21) zurückzuhalten; wobei die elastischen Einrichtungen (24) auf der dem Hohlraum (27) entgegengesetzten Seite zwischen jeweiligen der Bürsten (21) und jeweiligen Anschlageinrichtungen (30) in den Sitzen und gegenüber den Schultern (31) eingeklemmt sind.

6. Trägheitssystem nach Anspruch 4 oder 5, dadurch gekennzeichnet, daß die Isoliereinrichtung in Form von Luft vorliegt; und die zweiten elektrischen Kontakteinrichtungen (22) umfassen: zwei aus leitendem Material hergestellte Platten (33), die im Innern des Hohlraums (27) nebeneinander untergebracht sind, die auf eine drehbare Weise längs jeweiliger gegenüberliegender erster Seiten (34) miteinander verbunden sind, so daß sie elektrischen Kontakt miteinander haben, und die auf eine elektrisch kontaktierende Weise längs jeweiliger entgegengesetzter zweiter Seiten (34a) parallel zu und entgegengesetzt den ersten Seiten (34) mit den Bürsten (21) zusammenwirken und quer zur Gleitrichtung der Bürsten (21) angeordnet sind und den Bürstensitzen (25) zugewandt sind; wobei die Platten (33) unter Spannung einer über die ersten Seiten (34) angebrachten Feder (36) stehen, so daß sie eine bistabile Einheit bilden, die konstruiert ist, um selektiv zwei unterschiedliche stabile Stellungen anzunehmen, in einer ersten von welchen die Feder (36) gespannt ist und die Platten (33) im wesentlichen parallel zueinander und koplanar miteinander sind und längs der zweiten Seiten (34a) mit den Bürsten (21) Kontakt haben, und in einer zweiten von welchen die Platten (33) in Richtung auf die Feder (36) gewinkelt sind und die zweiten Seiten (34a) von den Bürsten (21) losgelöst sind.

7. Trägheitssystem nach Anspruch 6, dadurch gekennzeichnet, daß die freibewegliche Masse umfaßt: eine aus ferromagnetischem Material hergestellte Kugel (20), die im Innern des Hohlraums (27) unter den Platten (33) in einer im wesentlichen konischen Vertiefung (38) untergebracht ist und mit einer vorbestimmten Kraft durch einen Magneten (39) auf dem Boden der Vertiefung (38) zurückgehalten wird; wobei die Kugel (20), wenn sie sich vom Boden der Vertiefung (38) loslöst, die Platten (33) trifft, so daß sie durch die Feder (36) in die zweite Stellung gezogen werden.

8. Trägheitssystem nach Anspruch 7, dadurch gekennzeichnet, daß es umfaßt: eine Rücksetzeinrichtung (41), umfassend eine aus Isoliermaterial hergestellte Abdeckung (42), die an den Körper (26) angebracht ist, um den Hohlraum (27) zu verschließen, und die in Richtung auf den Hohlraum (27) im Widerstand gegen elastische Einrichtungen (44) bewegbar ist, um mit den Platten (33) in der zweiten Stellung zusammenzuwirken und sie im Widerstand gegen die Feder (36) in die erste Stellung rückzusetzen.

9. Trägheitssystem nach einem der vorangehenden Ansprüche, dadurch gekennzeichnet, daß es umfaßt: einen Alarmstromkreis (11), der mit dem elektrischen Stromkreis (3) des Fahrzeugs verbunden ist und zu dem Trägheitsschalter (10) parallelgeschaltet ist; wobei der Alarmstromkreis (11) umfaßt: einen Widerstand (12) und eine in der Fahrgastzelle des Fahrzeugs angeordnete Anzeigeeinrichtung (14).

## Revendications

1. Système inertiel de secours (1) pour déconnecter le circuit électrique (3) d'un véhicule, de la source d'électricité dans le cas d'un choc, pour empêcher que des étincelles soient produites par un court-circuit déclenché par le choc, et ainsi fournir une sécurité vis-à-vis d'un incendie; le système comprenant un interrupteur inertiel actif (10) branché en série avec ledit circuit électrique (3); l'interrupteur inertiel (10) comprenant une masse flottante (20), des premiers moyens de contact électriques (21) connecté à des bornes opposées (22,23) dudit circuit électrique (3) et séparé par des moyens isolants, et des seconds moyens de contact électriques (22a) coopérant avec la masse flottante (20) de manière à réaliser une commutation depuis une première position de fonctionnement, dans laquelle ces moyens court-circuitent lesdits premiers moyens de contact par l'intermédiaire desdits moyens isolants, jusqu'à une seconde position de fonctionnement, dans laquelle lesdits moyens sont déconnectés desdits premiers moyens de contact électriques; caractérisé en ce que lesdits premiers moyens de contact électriques comprennent des balais en charbon respectifs (21).

2. Système inertiel selon la revendication 1, caractérisé en ce que lesdits balais en charbon (21) sont du même type que ceux utilisés pour les contacts glissants alimentant les rotors de moteurs électriques.

3. Système inertiel selon la revendication 1 ou 2, caractérisé en ce que ledit interrupteur inertiel (10) est situé au voisinage de ladite source d'électricité et de façon plus spécifique directement en aval de ladite source d'électricité.

4. Système inertiel selon l'une quelconque des revendications précédentes, caractérisé en ce que lesdits balais (21) sont montés de manière à glisser, à l'opposé de moyens élastiques (24), à l'intérieur de sièges respectifs (25) formés dans un corps (26) réalisé en un matériau isolant; lesdits sièges (25) s'ouvrant en direction d'une cavité (27) contenant lesdits moyens isolants; et lesdits balais (21) faisant saillie à l'intérieur de ladite cavité (27) et étant connectés électriquement à des bornes respectives (30) montées à l'extérieur dudit corps (26).

5. Système inertiel selon la revendication 4, caractérisé en ce qu'en direction de ladite cavité (27), lesdits sièges (25) présentent des épaulements respectifs d'arrêt (31) servant à retenir lesdits balais (21); lesdits moyens élastiques (24) étant saisis, sur le côté situé à l'opposé de ladite cavité (27), entre lesdits balais respectifs (21) et des moyens d'arrêt respectifs (30) dans lesdits sièges et à l'opposé desdits épaulements (31).

6. Système inertiel selon la revendication 4 ou 5, caractérisé en ce que lesdits moyens isolants sont formés d'air; et lesdits seconds moyens de contact électriques (22) comprennent deux plaques (33) formées d'un matériau conducteur, logées côte-à-côte à l'intérieur de ladite cavité (27) et raccordées entre elles pour pouvoir tourner le long de premiers côtés opposés respectifs (34) de manière à être réciproquement en contact électrique, et coopérant de manière à établir un contact électrique avec lesdits balais (21) le long de seconds côtés opposés respectifs (34a) parallèlement et à l'opposé desdits premiers côtés (34), et situées transversalement par rapport à la direction de coulissement desdits balais (21) et situées en vis-à-vis desdits sièges (25) pour les balais; lesdites plaques (33) étant chargées par un ressort (36) monté en travers desdits premiers côtés de manière à former un ensemble bistable conçu pour prendre au choix deux positions stables différentes, dans une première desquelles le ressort (36) est mis en tension et lesdites plaques (33) sont sensiblement parallèles et coplanaires et sont en contact avec lesdits balais (21) le long desdits seconds côtés (34a), et dans la seconde desquelles lesdites plaques (33) sont inclinées en direction dudit ressort (36) et lesdits seconds côtés (34a) sont écartés desdits balais (21).

7. Système inertiel selon la revendication 6, caractérisé en ce que ladite masse flottante comprend une bille (20) formée d'un matériau ferromagnétique, logée à l'intérieur de ladite cavité (27), au-dessous desdites plaques (33), dans une poche sensiblement conique (38) et est retenue sur le fond de ladite poche (38) avec une force prédéterminée, par un aimant (39); ladite bille (20) rencontrant lesdites plaques (33) lorsqu'elle est écartée du fond de ladite poche (38), de sorte que les plaques sont tirées par lesdits ressorts (36) dans ladite seconde position.

8. Système inertiel selon la revendication 7, caractérisé en ce qu'il comprend un dispositif de remise à l'état initial (41) comprenant un capot (42) formé d'un matériau isolant, monté sur ledit corps (26) de manière à fermer ladite cavité (27) et déplaçable en direction de ladite cavité (27), à l'encontre de moyens élastiques (44), pour coopérer avec lesdites plaques (33) dans ladite seconde position et les ramener, à l'encontre dudit ressort (36), dans ladite première position.

9. Système inertiel selon l'une quelconque des revendications précédentes, caractérisé en ce qu'il comporte un circuit d'alarme (11) connecté audit circuit électrique (3) du véhicule et parallèlement audit interrupteur inertiel (10); ledit circuit d'alarme (11) comprenant une résistance (12), et des moyens d'affichage (14) situés dans le compartiment passagers du véhicule.
